# EUROPÄISCHE PATENTSCHRIFT

(11) **EP 0 592 386 B1**
(45) Veröffentlichungstag und Bekanntmachung des Hinweises auf die Patenterteilung: **28.05.1997**
(21) Anmeldenummer: 93890188.1
(22) Anmeldetag: 28.09.1993
(51) Int. Cl.: H04R 25/00, G02C 11/06

(54) **Knochenleitungs-Hörgerät**
Bone conduction hearing aid
Prothèse auditive à conduction osseuse

(30) Priorität: 07.10.1992 AT 1977/92
(43) Veröffentlichungstag der Anmeldung: 13.04.1994
(73) Patentinhaber: Viennatone Aktiengesellschaft, A-1164 Wien (AT)
(72) Erfinder: Wandl, Rudolf, A-1200 Wien (AT); Schermann, Kurt, A-7400 Oberwart (AT)
(74) Vertreter: Kliment, Peter, Dipl.-Ing.

(56) Entgegenhaltungen:
- DE-A- 2 707 038
- DE-A- 2 802 602
- DE-A- 3 032 956

## Beschreibung

Die Erfindung bezieht sich auf ein Knochenleitungs-Hörgerät, insbesondere Knochenleitungs-Hörbrille, mit einem in einem Gehause gehaltenen einen Permanentmagneten aufweisenden Magnetsystem mit einer Spule und einem an einer Ankerfeder gehaltenen Anker aus weichmagnetischem Material, der mit einem an dem Mastoid des Benutzers zur Anlage bringbaren Konduktorknopf zusammenwirkt, wobei das Gehäuse an den Kopf des Benutzers anpreßbar ist und im Bereich des Konduktorknopfes an dem Gehäuse eine Lagerfeder über eine Gummilagerung gehalten ist.

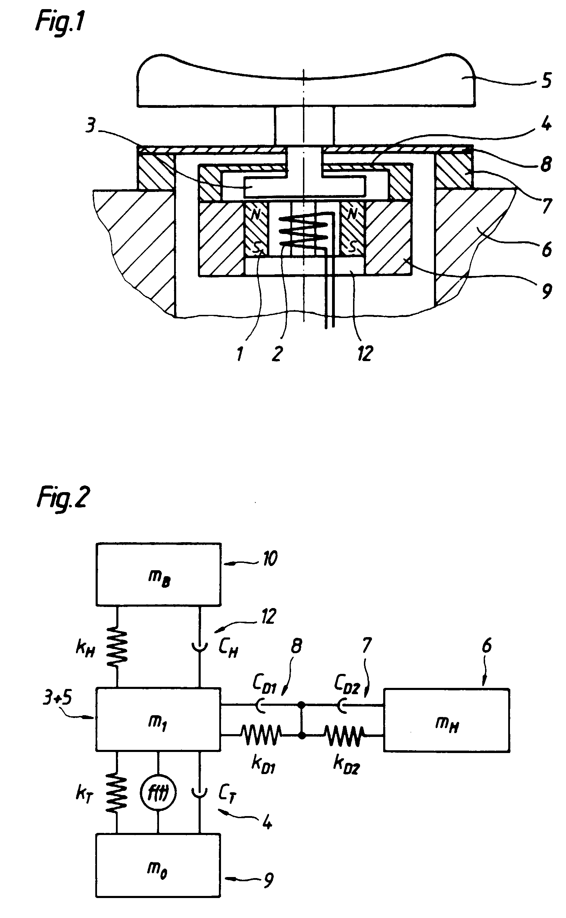

Ein solches bekanntes Knochenleitungs-Hörgerät, ist ausschnittweise in der Fig. 1 schematisch dargestellt.

Bei diesem besteht der Knochenhörer im wesentlichen aus einem Permanentmagneten in Form eines in einem Grundkörper 9 gehaltenen Ringmagneten 1, in dem eine Spule 2 angeordnet ist, die von einem Jochteil 12 durchsetzt ist, auf dem der Ringmagnet 1 aufsitzt. Dieses Magnetsystem 1, 2, 12 wirkt mit einem Anker 3 aus einem weichmagnetischen Material zusammen, der an einer Ankerfeder 4 gehalten ist, wobei zwischen dem Magnetsystem und dem Anker 3 in üblicher Weise ein kleiner Luftspalt vorgesehen ist.

Der Anker 3 ist mit einem Konduktorknopf 5 verbunden, der mittels einer Lagerfeder 8, die über eine Gummilagerung 7 am Gehäuse 6 des Hörgerätes, z.B. einer Knochenleitungs-Hörbrille gehalten ist.

Der Grundkörper 9 samt dem Magnetsystem 1, 2, 12 ist über die Ankerfeder 4 und den Anker 3 von der Lagerfeder 8 gehalten, die über die Gummilagerung 7 am Gehäuse 6 gehalten ist.

Das Gehäuse 6 selbst ist gegen den Kopf des Benutzers preßbar, wobei der Konduktorknopf 5 im Bereich des Mastoids des Benutzers anliegt.

Das Ausgangs-Wechselsignal eines nicht dargestellten Verstärkers gelangt an die Anschlüsse der Spule 1, wodurch der Anker 3 im Zusammenwirken mit dem permanenten Magnetfeld des Ringmagneten 1 aufgrund des entstehenden modulierten magnetischen Feldes in Schwingungen versetzt wird. Diese Schwingungen werden vom Konduktorknopf 5 über die Haut und die darunterliegende Fettschicht auf das Mastoid des Benutzers übertragen, wobei der nötige Anpreßdruck durch eine entsprechende Vorspannung des Gehäuses 6, das z.B. in Form eines Brillengestelles ausgebildet sein kann, und die Lagerfeder 8 sichergestellt wird, wobei deren Gummilagerung 7 zur Entkopplung dient.

Die Dimensionierung aller Teile erfolgte bisher nach empirischen Verfahren mit dem Ziel, im nötigen Übertragungsbereich eine größtmögliche Leistungsübertragung auf das Mastoid bei möglichst kleinen Geräteabmessungen zu erreichen. Idealerweise müßte dazu die Masse des Grundkörpers 9 mit dem eingebauten Magnetsystem unendlich groß sein, um die gesamte vom Anker 3 gelieferte Schwingungsenergie auf das Mastoid des Benutzers zu übertragen. In der Praxis, mit einer durchaus endlichen Masse des Grundkörpers 9, schwingt natürlich auch der Grundkörper 9 gegenphasig zum Koduktorknopf 5, wodurch ein Teil der Schwingungsenergie für die Vibrationsübertragung verlorengeht. Es liegt auf der Hand, daß bei sonst unverändertem Systemaufbau der Wirkungsgrad eines solchen Knochenhörers nur dadurch gesteigert werden kann, daß man den Grundkörper 9 möglichst massereich ausbildet. Dies läuft aber der Forderung nach einem möglichst schlanken und leichten Hörgerät genau entgegen.

Die empirischen Ermittlungsverfahren sind durch die Vielfalt der zu beeinflussenden Größen und dem damit im Zusammenhang stehenden Versuchsaufwand nur beschränkt geeignet, um das gewünschte Optimum zu erhalten. Um die Zusammenhänge besser erkennen zu können, wird bei schwingenden Systemen oft von einem Aufbau ausgegangen, wie er in der Fig. 2 in etwas vereinfachter Form dargestellt ist.

Dabei bedeuten:
- m1: die Masse der Ankerplatte 3 samt des mit dieser verbundenen Konuktorknopfes 5
- m0: die Masse des Grundkörpers 9 samt dem Magnetsystem 1, 12 und Spule 2,
- mB: die Masse des Kopfes des Benutzers,
- mH: die Masse des Gehäuses 6
- f(t): den eigentlichen Schwingungsgenerator (Magnetsystem 1, 12, 2 und Anker 3), der die Ausgangsleistung des nicht dargestellten Verstärkers in eine mechanische Leistung umsetzt.

Alle oben genannten Massen sind, wie aus der Fig. 1 zu ersehen ist, über elastische Elemente miteinander verbunden, die jeweils aus einer idealen Feder mit einer Federkonstante k und einer Dämpfung C zusammengesetzt angesehen werden.

Dabei steht der Index "H" für die Haut- und Fettschicht 11 zwischen dem Konduktorknopf 5 und dem Mastoid des Benutzers, der Index "T" für die Ankerfeder 4, der Index "D1" für die Lagerfeder 8 und der Index "D2" für die Gummilagerung 7 der Lagerfeder 8.

Bei einem gut konstruierten und dimensionierten System muß möglichst viel Energie von der Masse m1, die sich aus dem Anker 3 und dem Konduktorknopf 5 zusammensetzt, auf die Masse mB, die durch den Kopf 10 des Benutzers gebildet ist, über den Signalweg A, in dem die Haut und die Fettschicht 11 des Benutzers liegt, übertragen werden, um einen guten Wirkungsgrad zu erzielen. Von der Masse ml, sollte über den Signalweg B, der durch die Lagerfeder 8 und deren Gummilagerung 7 gebildet ist, so wenig Energie wie möglich auf die Masse mH, die durch die Masse des Gehäuses 6 gebildet ist, übertragen werden, um ein Mitschwingen des Gehäuses 6 und des darin eingebauten Mikrofons (nicht dargestellt) zu verhindern, weil dadurch eine Körperschall-Rückkopplung entstehen könnte.

Für eine optimale Leistungsübertragung im Signalweg A ergibt sich also ein Zusammenhang zwischen der Federkonstante k_{H} der Haut- und Fettschicht 11, die statisch erfaßt werden kann, und der Federkonstante k_{T} der Ankerfeder 4. Um andererseits eine gute Schallisolierung des Gehäuses 6, z.B. eines Bügels einer Hörbrille, zu erreichen, muß auch ein optimales Verhältnis zwischen den Federkonstanten k_{T} der Ankerfeder, k_{D1} der Lagerfeder 8 und k_{D2} der Gummilagerung 7 der Lagerfeder 8 erzielt werden.

Zu einem bestimmten Verhältnis der Masse ml des Ankers 3 und des Konduktorknopfes 5 zur Masse mO des Grundkörpers 9 samt Magnetsystem 1, 12 und der Spule 2 gibt es nur die Möglichkeit, verschiedene Federkonstanten zu paaren. Je nach konstruktiver Ausführung der Massen, Federn und Dämpfungen wird ein Frequenzbereich verstärkt oder gedämpft. Durch entsprechende Auswahl läßt sich der übertragbare Frequenzbereich verbreitern und die Leistung erhöhen. Charakteristisch dafür ist die Federkonstante k_{D1} der Lagerfeder 8 und die Federkonstante k_{D2} der Gummilagerung 7 der Lagerfeder 8.

Um ein möglichst stabiles Gerät zu erhalten, wurde bisher eine möglichst steife Lagerfeder 8 mit einer Federkonstante von mehr als 0,7N/cm verwendet und versucht, die Übertragung von Störenergie auf das Gehäuse 6 durch eine weiche Gummilagerung 7 desselben zu minimieren. Ein solches bisher übliches System zeichnet sich also dadurch aus, daß die Federkonstante k_{D1} der Lagerfeder sehr viel größer als die derkonstante k_{D2} ihrer Gummilagerung 7 ist und die Dämpfung C_{D2} der Gummilagerung 7 viel größer als die Dämpfung C_{D1} der Lagerfeder 8 ist und diese wieder viel größer als die Dämpfung C_{T} der Ankerfeder 4 ist, deren Dämpfung möglichst nahe dem Wert Null liegen soll.

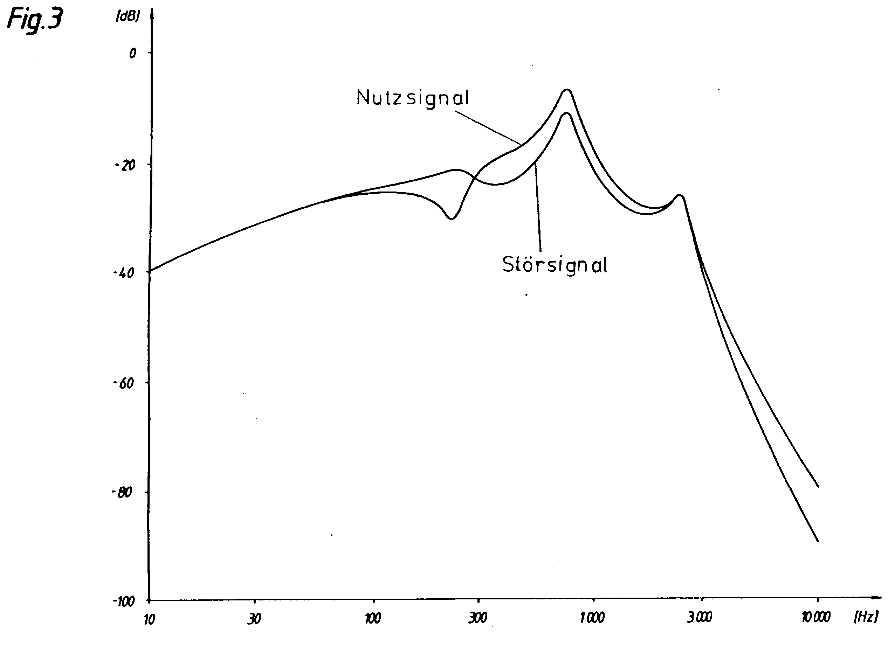

Wie aus der Fig. 3, die ein Frequenzdiagramm eines solchen herkömmlich dimensionierten Knochenhörsystems zeigt, zu ersehen ist, ist die gegenseitige Entkopplung eines solchen Systems recht mangelhaft und das auf das Gehäuse 6 übertragene Störsignal ist nahezu so groß, wie das auf das Mastoid des Benützers übertragene Nutzsignal. Um eine Rückkopplung zu verhindern, bedarf es daher einer sehr aufwendigen Mikrofon-Lagerung (nicht dargestellt) im Gehäuse 6.

Ziel der Erfindung ist es, diese Nachteile zu vermeiden und ein Knochenleitungs-Hörgerät der eingangs erwähnten Art vorzuschlagen, bei dem ein sehr erheblicher Unterschied in der Größe des Nutz- und des Störsignales gegeben ist.

Erfindungsgemäß wird dies dadurch erreicht, daß die Federkonstante der Lagerfeder höchstens 0,4N/cm beträgt.

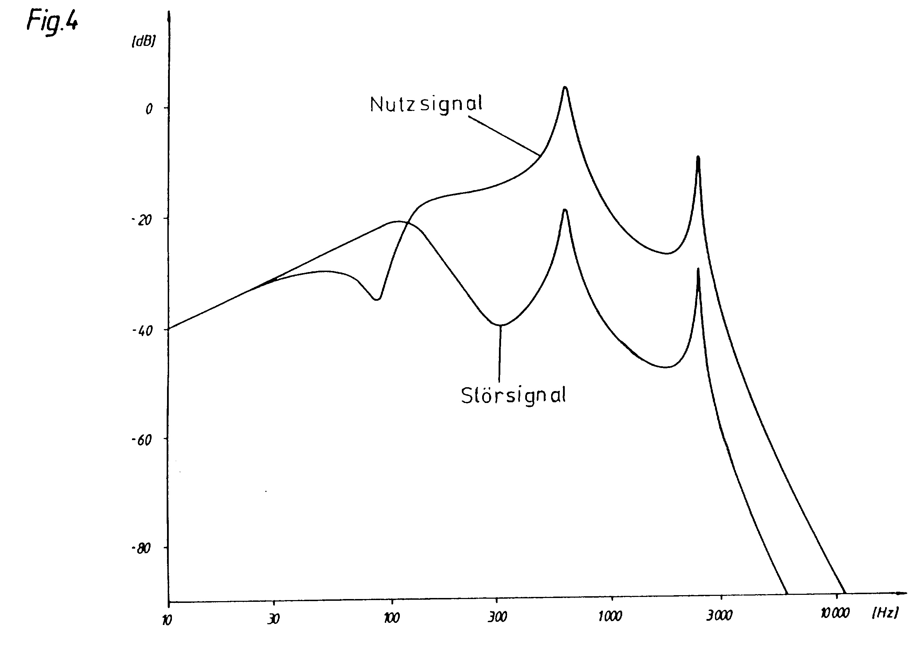

Durch diese Maßnahme hat sich überraschend eine Verbesserung des Abstandes des Nutzsignales vom Störsignal, verglichen mit herkömmlich dimensionierten Systemen um ca. 20dB ergeben. Außerdem ergibt sich durch die vorgeschlagenen Maßnahmen auch eine Erhöhung des Nutzsignales verglichen mit herkömmlich dimensionierten Knochenleitungs-Hörgeräten, wie aus einem Vergleich der Fig. 3 und 4, zu ersehen ist, von denen die Fig. 3 den Verlauf des Nutz- und des Störsignales bei einem herkömmlich dimensionierten Knochenleitungs-Hörgerät und die Fig. 4 den Verlauf des Nutz- und des Störsignales bei einem erfindungsgemäß dimensionierten Hörgerät zeigt.

Als besonders vorteilhaft hat es sich erwiesen, wenn die Federkonstante der Lagerfeder ungefähr gleich der Federkonstante ihrer Gummilagerung ist.

Durch die erfindungsgemäß vorgeschlagenen Maßnahmen kann daher, verglichen mit einem herkömmlich dimensionierten Hörgerät gleicher Ausgangsleistung, das Hörersystem wesentlich kleiner und leichter ausgebildet sein. Außerdem kann mit weniger aufwendigen Mikrofon-Lagerungen das Auslangen gefunden werden.

Die bei erfindungsgemäß dimensionierten Hörgeräten auftretende größere Welligkeit im Frequenzgang (Fig. 4) wirkt sich in der Praxis nicht störend aus, da die zu mittleren Frequenzen hin schlechtere Tiefenwiedergabe im Gegenteil zur besseren Verständlichkeit in lärmerfüllter Umgebung beiträgt.

## Patentansprüche

1. Knochenleitungs-Hörgerät, insbesondere Knochenleitungs-Hörbrille, mit einem in einem Gehäuse (6) gehaltenen, einen Permanentmagneten (1) aufweisenden Magnetsystem, einer Spule (2) und einem an einer Ankerfeder (4) gehaltenen Anker (3) aus weichmagnetischem Material, der mit einem an dem Mastoid des Benutzers zur Anlage bringbaren Konduktorknopf (5) zusammenwirkt, wobei das Gehäuse (6) an den Kopf des Benutzers anpreßbar ist und im Bereich des Konduktorknopfes (5) an dem Gehäuse (6) eine Lagerfeder (8) über eine Gummilagerung (7) gehalten ist, **dadurch gekennzeichnet,** daß die Federkonstante (k_{D1}) der Lagerfeder (8) höchstens 0,4N/cm beträgt.

2. Knochenleitungs-Hörgerät nach Anspruch 1, **dadurch gekennzeichnet**, daß die Federkonstante (k_{D1}) der Lagerfeder (8) ungefähr gleich der Federkonstante (k_{D2}) ihrer Gummilagerung (7) ist.

## Claims

1. A bone conduction hearing aid, in particular bone conduction hearing aid glasses, with a magnetic system held in a casing (6) and comprising a permanent magnet (1), a coil (2) and an armature (3) made of soft magnetic material which is held on an armature spring (4) and cooperates with a conductor button (5) which can be brought into contact with the mastoid of the user, with the casing (6) being pressable against the head of the user and a bearing spring (8) being held on the casing (6) by way of a rubber bearing (7) in the zone of the conductor button (5), characterized in that the spring constant (k_{D1}) of the bearing spring (8) is not more than 0.4 N/cm.

2. A bone conduction hearing aid as claimed in claim 1, charaterized in that the spring constant (k_{D1}) of the bearing spring (8) is approximately equal to the spring constant (k_{D2}) of its rubber bearing (7).

## Revendications

1. Prothèse auditive à conduction osseuse, notamment, lunettes auditives à conduction osseuse, avec un système magnétique situé dans un boîtier (6) et comportant un aimant permanent (1), avec une bobine (2) et une armature (3) réalisée en un matériel magnétique doux et retenu par un ressort d'armature (4), coopérant avec un bouton conducteur (5) pouvant être appuyé contre l'apophyse mastoïde de l'utilisateur, le boîtier (6) pouvant être pressé contre la tête de l'utilisateur, un ressort de support (8) étant monté sur le boîtier (6) au moyen d'un support en caoutchouc (7) dans le domaine du bouton conducteur (5), **caractérisé en ce que** la constante de rappel (k_{D1}) du ressort de support (8) s'élève à 0,4 N/cm maximum.

2. Prothèse auditive à conduction osseuse selon la revendication 1, **caractérisé en ce que** la constante de rappel (k_{D1}) du ressort de support (8) est approximativement égale à la constante de rappel (k_{D2}) de son support en caoutchouc (7).
